# EUROPEAN PATENT SPECIFICATION

(11) **EP 1 603 703 B1**
(45) Date of publication and mention of the grant of the patent: **10.10.2007**
(21) Application number: 04713589.2
(22) Date of filing: 23.02.2004
(51) Int. Cl.: B23K 33/00, B32B 3/06, B32B 3/08, B32B 15/08, B63B 3/20, E04C 2/292, E04C 2/38, F16B 5/08

(54) **METHOD FOR CONNECTING BY WELDING STRUCTURAL SANDWICH PLATE MEMBERS WITH CHANNEL-SHAPED CONNECTING MEMBERS**
VERFAHREN ZUR SCHWEISSVERBINDUNG VON KONSTRUKTIONSSANDWICHPLATTENGLIEDERN MIT KANALFÖRMIGEN VERBINDUNGSGLIEDERN
PROCEDE DE RACCORDEMENT PAR SOUDURE D'ELEMENTS DE PLAQUES SANDWICH STRUCTURELS A L'AIDE D'ELEMENTS DE RACCORDEMENT EN FORME DE CANAL

(30) Priority: 18.03.2003 GB 0306198
(43) Date of publication of application: 14.12.2005
(73) Proprietor: Intelligent Engineering (Bahamas) Limited, Nassau (BS)
(72) Inventor: KENNEDY, Stephen, J., Ottawa, Ontario K1Y 0N2 (CA)
(74) Representative: Leeming, John Gerard
(86) International application number: PCT/GB2004/000704
(87) International publication number: WO 2004/082886

(56) References cited:
- WO-A-03/033337
- WO-A-03/101821
- CH-A- 490 588
- GB-A- 2 372 476
- US-A- 3 235 040
- US-A- 6 050 208

## Description

The present invention relates to a method of connecting two structural sandwich plate members which comprise two outer plates and a core of plastics or polymer material bonded to the outer plates with sufficient strength to substantially contribute to the structural strength of the member (see claim 1).

Structural sandwich plate members, as described in US 5,778,813 and US 6,050,208, comprise outer metal, e.g. steel, plates bonded together with an intermediate elastomer core, e.g. of unfoamed polyurethane. These sandwich plate systems may be used in many forms of construction to replace stiffened steel plates and greatly simplify the resultant structures, improving strength and structural performance (stiffness, damping characteristics) while saving weight. Further developments of these structural sandwich plate members are described in International Patent Application WO 01/32414. As described therein, foam forms may be incorporated in the core layer to reduce weight and transverse metal sheer plates may be added to improve stiffness.

According to the teachings of WO 01/32414 the foam forms can be either hollow or solid. Hollow forms generate a greater weight reduction and are therefore advantageous. The forms described in that document are not confined to being made of lightweight foam material and can also be make of other materials such as wood or steel boxes.

International Patent Application WO 02/078948 is a further development of the concept of including hollow forms and describes forms that are easy to manufacture and assemble, in particular hollow elongate forms made from snap-together pieces are described.

To connect together two (or more) structural sandwich plate members, rolled or extruded members such as described in GB-A-2 372 476, which is considered to represent the most relevant state of the art, may be used. These members accommodate a wide variety of forms of join but each different arrangement of plate members requires a different joining member. British Patent Application GB-2 380 970-A describes a universal connector in the form of a solid bar of octagonal cross-section which is welded into the periphery of a structural sandwich plate member with part of the bar projecting out from between the faceplates of the structural sandwich plate member. Two (or more) plates with such connectors can be welded together in various different ways. This connector solves the problem of requiring many different members to join plate members in many different arrangements but is relatively heavy.

It is an aim of the present invention to provide a method of connecting structural sandwich plate members that uses a single, lightweight connector to connect plate members together.

According to the present invention, there is provided a method of connecting two structural sandwich plate members each of which comprises two outer plates and a core of plastics or polymer material bonded to the outer plates with sufficient strength to transfer shear forces therebetween, the method comprising :
providing in the edges of the structural sandwich plate members to be joined channel-shaped connecting members, the connecting members fitting between, and projecting beyond the ends of the outer plates of their respective structural sandwich plate members;
placing the structural sandwich plate members together so that the edges to be joined abutt; and
forming a weld between the outer plates of the two structural sandwich plate members.

The convex side of the connecting member projects from between the two outer plates. When the plate members abutt, the connecting member spaces apart the outer plates of the two plate members to allow a full thickness weld to be formed and acts as backing bar for that weld.

The materials, dimensions and general properties of the outer plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208.

Lightweight forms may be included in the core, as described in WO 01/32414 and WO 02/078948. It should be noted that the lightweight forms serve to reduce the mass of the structural sandwich plate member and need not contribute significantly to its structural strength. The principal requirements on the lightweight forms are that they are of lower density than the plastics or polymer material forming the core and have sufficient thermal and mechanical properties to maintain the desired shape during injection and curing of the plastics or polymer core. The layout of the forms within the core may be as described in British Patent Application GB-2 389 072-A filed 29 May 2002.

The present invention will be described below with reference to an exemplary embodiment and the accompanying schematic drawings, in which:
Figure 1 is a cross-sectional view of parts of two structural sandwich plate members joined according to a first method of the present invention; and
Figure 2 is an enlarged part cross-sectional view of a structural sandwich plate member according to the present invention.

In the various drawings, like parts are indicated by like reference numerals.

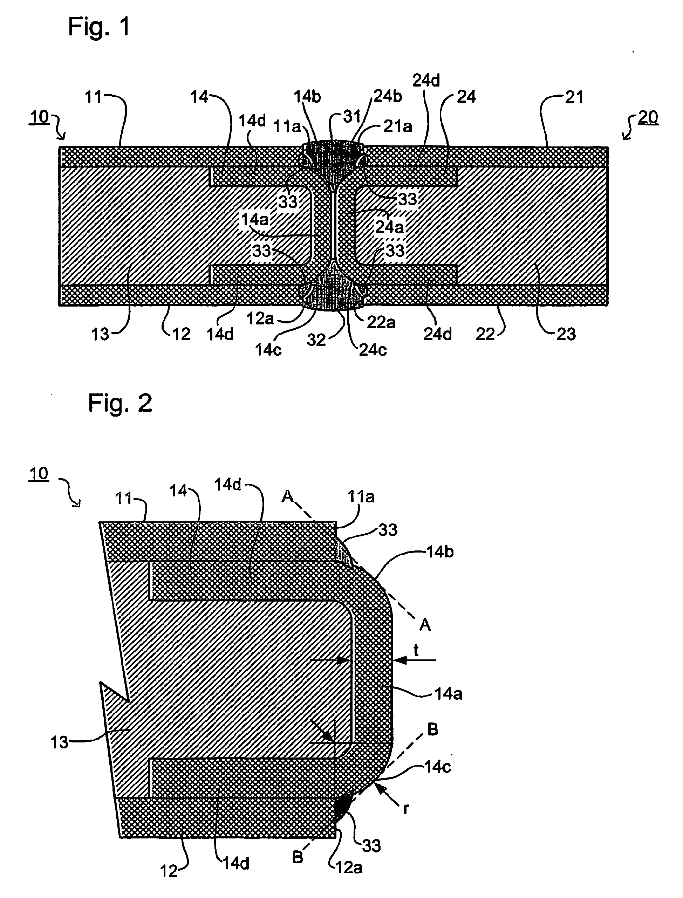

Each of the structural sandwich plate members 10, 20 shown in Figure 1 comprises upper and lower outer plates (faceplates) 11, 12, 21, 22 which may be of steel and have a thickness of e.g. in the range of from 0.5 to 20mm. Edge plates are welded between the faceplates 11, 12, 21, 22 around their outer peripheries to form a closed cavity. In the cavity between the faceplates 11, 12, 21, 22 is a core 13, 23 of compact (i.e. unfoamed) plastics or polymer material, preferably a polyurethane elastomer. This core may have a thickness in the range of from 15 to 200mm. The core 13, 23 is bonded to the faceplates 11, 12, 21, 22 with sufficient strength and has sufficient mechanical properties to transfer shear forces expected in use between the two faceplates. The bond strength between the core 13, 23 and faceplates 11, 12, 21, 22 should be greater than 3MPa, preferably 6MPa, and the modulus of elasticity of the core material should be greater than 250MPa. For low load applications, such as floor panels, where the typical use and occupancy loads are of the order of 1.4kPa to 7.2kPa, the bond strength may be lower, e.g approximately 1MPa. By virtue of the core layer, the structural sandwich plate member has a strength and load bearing capacity of a stiffened steel plate having a substantially greater plate thickness and significant additional stiffening.

To reduce the weight of the structural sandwich plate member 10, an array of lightweight forms may be provided, occupying a substantial part of the internal volume of the plate member. The lightweight forms do not need to significantly contribute to the structural strength of the plate and they require only to have thermal and mechanical properties sufficient to withstand the pressure of injection of the material to form core 13 and the heat from the exothermic reaction of the core during curing.

Along an edge at which one of the structural sandwich plate members is to be joined to another plate member of like type, the edge member takes the form of a channel section 14, 24 fitting between the faceplates 11, 12, 21, 22 with its concave side facing inward. The base portions 14a, 24a and corner portions 14b, 14c, 24b, 24c project outwardly of the ends 11a, 12a, 21a, 22a of the faceplates of the two structural sandwich plate members such that when two plate members are butted against each other, spaces are formed between the ends of the plate members 11a, 21a and 12a, 22a and bounded by the corner portions 14b, 24b and 14c, 24c. To join the two structural sandwich plate members 10, 20, a weld 31, 32 is formed in each of the spaces. A direct connection between the faceplates is thereby achieved quickly and simply. The corner portions 14b, c and 24b, c act as weld preparation for this weld.

Figure 2 shows the position of the connecting member 14 in structural sandwich plate member 10 in more detail. As there shown, the connecting member 14 projects so that the tangents A-A, B-B to the corners 14b, 14c pass through the ends 11a, 12a of the faceplates 11, 12. This ensures that sufficient space is left between the faceplates of adjacent plate members to form a substantial weld whilst the corner portions 14b, 14c form weld preparations for the weld to join the faceplates. The radius of curvature, r, of the corner portions 14b, 14c is preferably equal to twice the thickness, t, of the metal plate from which the connecting member 14 is rolled. The thickness, t, will depend on the application to which the plates are to be put but will in general be comparable to the thickness of the faceplates 11, 12, e.g. 5 or 6 mm for shipbuilding applications.

The connecting member, if connected to the faceplates with sufficient strength, can contribute significantly to the strength of the plate member in the region of the join. This ensures that the plate member has sufficient strength even if the heat from the weld between the faceplates damages the elastomer core. In this case the connecting member can be welded to the faceplates with one pass seal welds 33.

If, in the final structure the connecting pieces 14, 24 do not need to carry loads between the structural sandwich plate members, they can be bonded to their respective plate members by the cores 13, 23. Thus, when the plate members are made, the connectors 14, 24 can be held in place by any simple convenient method, appropriate to the method of construction of the panels. For example, if the plate members are made in a mold, the clamping force of the mold bearing on the faceplates may be sufficient to hold the connecting members in place. Alternatively, a light adhesive, or a few spot welds may suffice. If the plate member is made using the faceplates to define the cavity for injection of the core, without a mold, the connecting members may be held in place with a ship-building adhesive or with light welds.

Manufacture of the plate members may be performed in situ, or off-site in factory conditions and the finished panel transported to the installation site.

It will be appreciated that the above description is not intended to be limiting and that other modifications and variations that fall within the scope of the present invention, which is defined by the appended claims, are possible.

## Claims

1. A method of connecting two structural sandwich plate members (10, 20) each of which comprises two outer plates (11, 12; 21, 22) and a core (13, 23) of plastics or polymer material bonded to the outer plates (11, 12; 21, 22) with sufficient strength to transfer shear forces therebetween, the method comprising:
providing in the edges of the structural sandwich plate members (10, 20) to be joined channel-shaped connecting members (14, 24), the connecting members (14, 24) fitting between, and projecting beyond the ends of the outer plates (11, 12; 21, 22) of their respective structural sandwich plate members (10, 20);
placing the structural sandwich plate members (10, 20) together so that the edges to be joined abutt; and
forming a weld between the outer plates (11, 12; 21, 22) of the two structural sandwich plate members (10, 20).

2. A method according to claim 2 wherein in said step of providing, said connecting members (14, 24) are positioned so that the tangents to the corner thereof pass through the ends of said outer plates (11, 12; 21, 22).

3. A method according to claim 1 or 2 wherein in said step of providing, said connecting members (14, 24) are welded to said outer plates (11, 12; 21, 22) by a one-pass seal weld (33).

4. A method according to claim 1, 2 or 3 wherein the step of providing connecting members (14, 24) is performed at a different site than the steps of placing the structural sandwich plate members (10, 20) together and forming the weld (31, 32).

## Patentansprüche

1. Verfahren zum Verbinden von zwei Struktursandwichplattenbauteilen (10, 20), von denen jedes zwei äußere Platten (11, 12; 21, 22) und einen Kern (13, 23) aus Plastik oder Polymermaterial, das mit den äußeren Platten (11, 12; 21, 22) mit einer ausreichenden Stärke zum Übertragen von Scherkräften zwischen ihnen verbunden ist, aufweist, wobei das Verfahren aufweist:
Vorsehen von kanalförmigen Verbindungsbauteilen (11, 24) in den Rändern der zusammenzufügenden Struktursandwichplattenbauteile (10, 20), wobei die Verbindungsbauteile (14, 24) zwischen die Enden der äußeren Platten (11, 12; 21, 22) der entsprechenden Struktursandwichplattenbauteile (10, 20) passen und über diese vorstehen,
Anordnen der Struktursandwichplattenbauteile (10, 20) aneinander derart, dass die zusammenzufiigenden Ränder aneinander anstoßen, und
Bilden einer Schweißung zwischen den äußeren Platten (11, 12; 21, 22) der zwei Struktursandwichplattenbauteile (10, 20).

2. Verfahren nach Anspruch 1, bei dem in dem Schritt des Vorsehens die Verbindungsbauteile (14, 24) so positioniert werden, dass die Tangenten an die Ecken derselben durch die Enden der äußeren Platten (11, 12; 21, 22) verlaufen.

3. Verfahren nach Anspruch 1 oder 2, bei dem in dem Schritt des Vorsehens die Verbindungsbauteile (14, 24) an die äußeren Platten (11, 12; 21, 22) durch eine Einlagendichtschweißung (33) geschweißt werden.

4. Verfahren nach Anspruch 1, 2 oder 3, bei dem der Schritt des Vorsehens von Verbindungsbauteilen (14, 24) an einem anderen Ort durchgeführt wird als die Schritte des Anordnens der Struktursandwischplattenbauteile (10, 20) und des Ausbildens der Schweißung (31, 32).

## Revendications

1. Procédé de raccordement de deux éléments structurels de plaque en sandwich (10, 20), chacun d'eux comprenant deux plaques extérieures (11, 12; 21, 22) et une âme (13, 23) en plastique ou en polymère collée aux plaques extérieures (11, 12; 21, 22) avec une résistance suffisante pour transférer les forces de cisaillement entre elles, le procédé comprenant les étapes consistant à :
mettre en place dans les bords des éléments structurels de plaque en sandwich (10, 20) destinés à être reliés des éléments de raccordement en forme de canal (14, 24), les éléments de raccordement (14, 24) s'insérant entre et dépassant au-delà des extrémités des plaques extérieures (11, 12 ; 21, 22) de leurs éléments structurels de plaque en sandwich respectifs (10, 20) ;
placer les éléments structurels de plaque en sandwich (10, 20) ensemble de telle sorte que les bords destinés à être reliés sont en contact ; et
former une soudure entre les plaques extérieures (11, 12; 21, 22) des deux éléments structurels de plaque en sandwich (10, 20).

2. Procédé selon la revendication 2, dans lequel dans ladite étape de mise en place, lesdits éléments de raccordement (14, 24) sont positionnés de telle sorte que les tangentes à leur coin passent par les extrémités desdites plaques extérieures (11, 12; 21, 22).

3. Procédé selon la revendication 1 ou 2, dans lequel dans ladite étape de mise en place, lesdits éléments de raccordement (14, 24) sont soudés auxdites plaques extérieures (11, 12; 21, 22) par une soudure d'étanchéité à passe unique (33).

4. Procédé selon la revendication 1, 2, ou 3, dans lequel l'étape de mise en place des éléments de raccordement (14, 24) est effectuée dans un site différent des étapes consistant à placer les éléments structurels de plaque en sandwich (10, 20) ensemble et à former la soudure (31, 32).
